# FASCICULE DE BREVET EUROPEEN

(11) **EP 3 645 256 B1**
(45) Date de publication et mention de la délivrance du brevet: **18.05.2022**
(21) Numéro de dépôt: 18752544.9
(22) Date de dépôt: 29.06.2018
(51) Int. Cl.: B29C 70/50, B29K 101/10

(54) **MATÉRIAU COMPOSITE CONSTITUÉ DE FIBRES TISSÉES PRÉ-IMPRÉGNÉES**
VERBUNDMATERIAL MIT VORIMPRÄGNIERTEN GEWEBTEN FASERN
COMPOSITE MATERIAL COMPRISING PRE-IMPREGNATED WOVEN FIBRES

(30) Priorité: 30.06.2017 FR 1756227
(43) Date de publication de la demande: 06.05.2020
(73) Titulaire: Safran Nacelles, 76700 Gonfreville-l'Orcher (FR); Safran, 75015 Paris (FR)
(72) Inventeur: DESJOYEAUX, Bertrand, 76700 Gonfreville L'Orcher (FR); OLIVEUX, Geraldine, 76700 Gonfreville L'Orcher (FR); THOMAS, Cedric, 76700 Gonfreville L'Orcher (FR)
(74) Mandataire: Germain Maureau
(86) Numéro de dépôt international: PCT/FR2018/051625
(87) Numéro de publication internationale: WO 2019/002801

(56) Documents cités:
- EP-A1- 0 415 436
- EP-A1- 2 179 838
- WO-A1-2010/010584
- WO-A1-2015/057270
- FR-A1- 2 740 149

## Description

La présente invention se rapporte à un matériau à fibres tissées pré-imprégnées ordonnées pour la réalisation de pièces de géométrie complexe et pouvant avoir des épaisseurs variables.

Pour fabriquer des pièces en matériau composite fibreux (ou à fibres discontinues ordonnées) à géométrie complexe, en particulier à épaisseur variable, dans le domaine de l'aéronautique, il est connu d'utiliser un procédé de moulage comportant une étape de thermocompression de matériaux fibreux pré-imprégnés de résine thermodurcissable.

Il est connu d'utiliser un matériau fibreux pré-imprégné à base de fibres continues sous formes de nappes de fibres unidirectionnelles ou de tissus, mais le drapage par couches successives rend difficile et coûteuse, la réalisation de pièces composites ayant des épaisseurs variables. Il est nécessaire de découper et d'empiler plusieurs couches de matériau fibreux pré-imprégné ayant une forme adaptée aux épaisseurs locales.

Un autre inconvénient est le risque de délaminage accru dans les zones d'épaisseur variable situées en bordure de pièce et une déformabilité locale du matériau et de l'empilement limitée par la continuité des fibres.

Pour résoudre ce problème, il est possible d'utiliser des fibres unidirectionnelles discontinues se présentant sous forme de 'matelas' et imprégnées de résine thermodurcissable pour former un composite du type HexMC^{®}, par exemple.

Il est également possible d'utiliser des fibres unidirectionnelles discontinues se présentant sous forme de bâtonnets dispersés (comme un Mikado) et imprégnées de résine thermoplastique pour former un composite du type Xycomp^{®}, par exemple.

Le procédé de moulage comprend alors une étape de découpe de morceaux de fibres dans des nappes ou des câbles de fibres unidirectionnelles imprégnées de résine.

Cependant, la maitrise de la distribution des orientations des fibres est difficile et ne permet pas d'obtenir des composites ayant des propriétés quasi-isotropes dans le plan, en particulier dans le cas de composites présentant une épaisseur fine.

On connait également le brevet FR 2 770 802 divulguant un procédé de moulage d'une pièce à partir d'une nappe non tissée de fibres de renfort pré-imprégnées au moyen d'une matrice thermodurcissable ou thermoplastique.

Le procédé comprend une étape de découpe de la nappe de manière à former une multiplicité d'éléments discrets et une étape de mise en place des éléments discrets selon un arrangement aléatoire et tridimensionnel directement dans le moule.

Cette étape est suivie d'une étape de chauffe des fibres de renfort et de la matrice et de compression dans le moule permettant la consolidation du matériau à la forme souhaitée.

Cependant ce procédé aboutit à un matériau dans lequel les fibres sont orientées aléatoirement dans les trois directions de l'espace (X, Y, Z), ce qui ne permet pas d'obtenir des propriétés mécaniques maitrisées et élevées dans des directions particulières et notamment dans les plans des pièces.

Le document WO 2010/010584 (mais également les documents WO 2015/057270, EP 2 179 838 et FR 2 740 149) divulgue un matériau de fibres tissées pré-imprégnées caractérisé en ce qu'il se présente sous la forme d'un matelas fibreux comprenant au moins une couche de plusieurs morceaux de tissus fibreux pré-imprégnés de résine, lesdits morceaux de tissus étant en outre positionnés parallèlement au plan (X, Y) du matelas fibreux et orientés selon différentes directions dans ledit plan (X, Y).

Ces procédés ne permettent pas d'obtenir un produit transformé qui offre des propriétés au moins orthotropes élevées voire quasi isotropes élevées dans des surfaces principales pour des géométries 3D de pièces d'épaisseurs variables comprenant notamment des épaisseurs fines.

La présente invention vise à résoudre tout ou partie de ces inconvénients en proposant un matériau réalisé notamment à partir de fibres tissées pré-imprégnées de résine.

Selon l'invention telle que définie par l'objet de la revendication 1, le matériau se présente sous la forme de matelas fibreux comprenant au moins une couche de plusieurs morceaux de tissus fibreux préimprégnés de matrice ou résine une partie au moins du tissu formant le matelas fibreux présentant une contexture à faible embuvage. Ces morceaux de tissus sont positionnés parallèlement au plan (X, Y) du matelas fibreux et orientés selon différentes directions dans ce plan (X, Y).

Le matelas selon l'invention peut comporter de plus une ou plusieurs caractéristiques suivantes, qui peuvent être prises seules ou combinées entre elles :
- l'intégralité du tissu utilisé pour former le matelas de morceaux de tissu pré-imprégné présente une contexture à faible embuvage,
- le tissu utilisé est une contexture de fibres de carbone, de fibres de verre, de fibres d'aramide, de fibres de basaltes, de céramiques, seules ou en combinaison,
- les fibres constituant le tissu comprennent des filaments continus ou des filaments discontinus,
- le ratio entre la longueur et l'épaisseur des morceaux de tissu du matelas est sensiblement compris entre 60 et 250,
- le ratio entre la longueur et l'épaisseur des morceaux de tissu du matelas est sensiblement compris entre 80 et 200,
- le ratio entre la longueur et l'épaisseur des morceaux de tissu du matelas est sensiblement compris entre 100 et 180,
- la largeur des morceaux de tissu du matelas est supérieure au quart de leur longueur,
- la largeur des morceaux de tissu du matelas est supérieure à la moitié de leur longueur,
- la largeur des morceaux de tissu du matelas est sensiblement égale à la longueur,
- les morceaux de tissu constituant le matelas présentent une forme polygonale, préférentiellement rectangulaire, hexagonale, ou triangulaire,
- le matelas fibreux présente une masse surfacique moyenne au moins 2 fois supérieure à la masse surfacique du tissu constitutif et inférieure à 10 fois la masse surfacique du tissu constitutif,
- le matelas fibreux présente une masse surfacique moyenne comprise entre 1 kg/m² et 3 kg/m²,
- le matelas fibreux comprend une ou plusieurs couches de morceaux de fibres tissées pré-imprégnées agglomérés et liés entre eux de façon à ce qu'il présente des propriétés quasi isotropes dans le plan (X, Y) grâce à l'orientation des morceaux de tissus comportant, d'une part pour chaque morceau de tissu, deux orientations de fibres sensiblement perpendiculaires entre elles, d'autre part les morceaux proches les uns des autres ont des directions de fibres différentes offrant au matériau composite constitué, une raideur de même ordre de grandeur, quelle que soit la direction dans le plan (X, Y) , représentative d'un matériau isotrope dans le plan (X, Y),
- le matelas peut comprendre aussi des morceaux de nappes de fibres unidirectionnelles pré-imprégnées,
- le matelas présente en toute zone d'au moins 2 cm² (par exemple 1,4 cm x 1,4 cm), 4 directions de fibres distinctes formant des angles de plus de 15° entre elles,
- la résine est constituée d'un polymère thermodurcissable ou d'un polymère thermoplastique.

L'invention concerne également une pièce en matériau à fibres tissées pré-imprégnées.

Selon l'invention, la pièce en matériau à fibres tissées pré-imprégnées est réalisée par thermocompression d'au moins un matelas ou morceau de matelas de matériau constitué de fibres tissées pré-imprégnées découpées en morceaux tel que défini ci-dessus.

Avantageusement, la pièce en matériau à fibres tissées pré-imprégnées comprenant au moins un morceau de matelas présente des propriétés quasi isotropes selon certains plans grâce à la thermocompression du matelas offrant des fibres dans de multiples orientations dans le plan du matelas de la pièce moulée.

La pièce réalisée à partir du matelas tel que défini précédemment présente des propriétés de résistance mécanique élevée et homogène, y compris dans les zones de faible épaisseur.

L'invention permet de réaliser des pièces d'épaisseur variable jusqu'à environ 10 mm et est particulièrement avantageuse pour les pièces présentant au moins localement des épaisseurs faibles jusqu'à une à deux fois l'épaisseur du tissu constitutif du matelas.

L'invention permet ainsi la réalisation de pièces à géométries complexes à hautes performances par un procédé simple et peu couteux.

D'autres caractéristiques et avantages de l'invention ressortiront à la lecture de la description qui suit, donnée uniquement à titre d'exemple, en référence à:
- la figure 1 représente un rouleau de matelas selon l'invention ;
- la figure 2 montre en détail le matelas selon l'invention constitué d'un empilement de morceaux de tissu ;
- la figure 3 montre une vue en transparence de ce matelas en détail avec des flèches représentatives des orientations de fibres ;
- les figures 4a à 4f montrent des modes de réalisation possibles de pièces à partir du matériau selon l'invention.

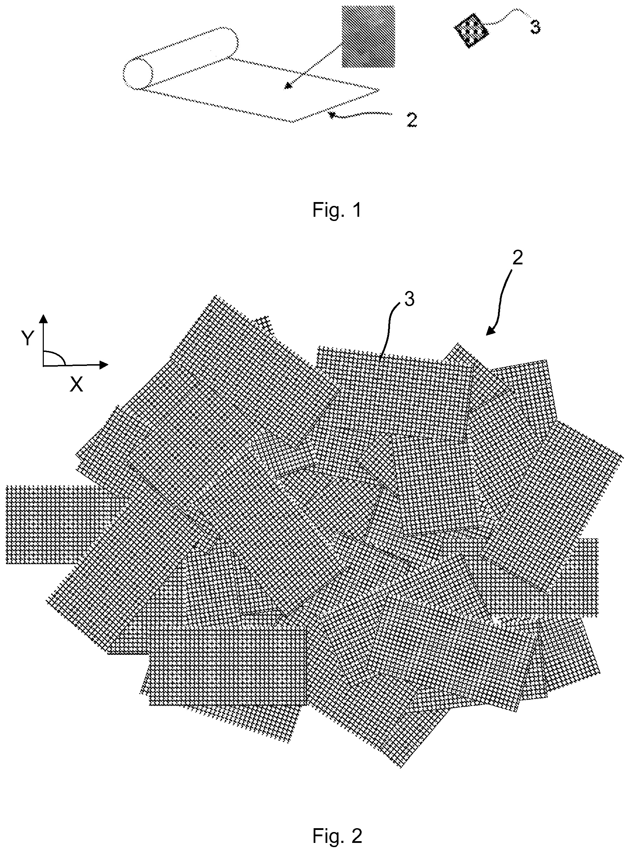

La figure 1 montre un rouleau partiellement déroulé de matelas fibreux 2 selon l'invention.

Le matelas est constitué de morceaux de tissus 3 de fibres pré-imprégnées de matrice ou résine disposés parallèlement au plan (X, Y) du matelas.

Les morceaux de tissus 3 sont empilés les uns sur les autres et sont disposés parallèlement au plan (X, Y).

La matrice peut être une résine thermodurcissable, notamment époxy, ou une résine thermoplastique telle que PEI, PAEK, PA... ou précurseur de céramique.

Les fibres peuvent être des fibres de carbone, des fibres de verre, des fibres de kevlar, des fibres céramiques telles que SiC (carbure de silicium) ou oxydes d'alumines ou autre.

Optionnellement, les fibres sont des fibres dites continues, c'est-à-dire des mèches constituées d'ensembles de filaments continus parallèles ou retordus.

Selon une autre variante, les fibres sont des fibres dites discontinues, c'est-à-dire des mèches constituées d'agrégat de filaments de longueur finie maintenus ensemble par retordage et/ou ensimage et/ou guipage. Par exemple, il peut s'agir de fibres de verre de type Verranne ou de fibres de carbone de type 'fibres craquées' (stretch broken fibres).

Les tissus peuvent être d'un seul type de fibres ou de combinaisons de fibres entrelacées selon des motifs tels que toile, sergé, satin ou tressage, ou encore empilées dans différentes directions et cousues (NCF).

Avantageusement, les fibres sont croisées et entrelacées selon deux directions perpendiculaires et préférentiellement en proportions sensiblement identiques selon chacune des deux directions.

Les fibres à l'intérieur des morceaux de tissus 3 sont disposées sensiblement parallèlement au plan (X, Y).

Selon une autre variante, le matelas fibreux peut être une combinaison de morceaux de tissu de fibres pré-imprégnées et de morceaux de nappe de fibres unidirectionnelles pré-imprégnées répondant aux mêmes caractéristiques géométriques, les fibres pouvant être de même nature ou de nature différente tel que décrit précédemment.

Les tissus sont caractérisés par des contextures à faible embuvage telles que sergé 2x2, sergé 3x1, satin de 5 ou de 8.

Il est entendu par des tissus présentant des contextures à faible embuvage, des contextures dans lesquelles les ondulations des fils, ou mèches, d'une direction du tissu croisant les mèches de l'autre direction du tissu donnent un faible relief en épaisseur au tissu.

On obtient une telle caractéristique d'une part en utilisant préférentiellement des mèches présentant une section enveloppe des filaments, qui composent les mèches ou fils, sensiblement ellipsoïdale très aplatie, et de préférence encore par un motif de tissage du tissu dans lequel une majorité des mèches de trame passent sur au moins deux mèches de chaine telles que sergé 2x2, sergé 3x1, satin de 5 ou de 8.

De telles textures présentent alors un embuvage inférieur à 5%. Préférentiellement l'embuvage est inférieur à 2%. Préférentiellement encore l'embuvage est inférieur à 0,7%.

Ainsi les tissus offrent d'une part de bonnes propriétés mécaniques dans le plan, et présentent de bonnes capacités de déformation par décadrage des fibres entre directions chaine et trame lors de la compression de la matière.

Avantageusement, grâce à ces contextures, les tissus de fibres pré-imprégnées ont une épaisseur apparente à l'état initial de moins de 200% de l'épaisseur du morceau de tissu associé après thermocompression. Préférentiellement le tissu de fibres pré-imprégnées a une épaisseur maximum initiale inférieure à 170% de l'épaisseur du morceau de tissu après thermocompression.

La figure 2 montre un détail d'un exemple de matelas fibreux 2 présentant un empilement avec superposition de plusieurs couches de plusieurs morceaux de tissus 3 orientés selon différentes directions dans le plan (X, Y) et les morceaux se recouvrant partiellement les uns les autres.

Les morceaux de tissu 3 présentent une forme polygonale et de préférence quadrilatérale.

De préférence, les morceaux de tissu 3 ont une forme triangulaire ou rectangulaire ou hexagonale.

Les dimensions des morceaux de tissu 3 sont telles que le ratio entre leur plus grande longueur et l'épaisseur de la couche de tissu du matelas fibreux 2 est compris sensiblement entre 60 et 250.

De préférence, les morceaux de tissu 3 présentent une longueur au moins 80 fois supérieure à l'épaisseur de la nappe de fibres tissées.

De manière préférée, les morceaux de tissu 3 présentent une longueur au moins 100 fois supérieure à l'épaisseur de la nappe de fibres tissées.

Les dimensions des morceaux de tissu 3 sont telles que le ratio entre leur plus grande longueur et leur largeur est inférieur ou égal à 4.

De manière préférée, la largeur des morceaux de tissu 3 du matelas fibreux 2 est supérieure à la moitié de leur longueur.

De manière préférée, la largeur des morceaux de tissu 3 du matelas fibreux 2 est sensiblement égale à leur longueur.

Les morceaux de tissu 3 sont découpés dans des tissus tels que définis précédemment. Ils ont une masse surfacique de tissu sec comprise entre 0,160 kg/m² et 0,6 kg/m².

Les morceaux de tissu 3 sont imprégnés de résine thermodurcissable ou thermoplastique selon un ratio volumique résine/fibre compris entre 0,35 et 0,55.

Le matelas fibreux 2 constitué à partir de ces morceaux de tissu 3 est caractérisé par le fait que les morceaux de tissu 3 sont disposés dans le plan du matelas fibreux 2 ou sensiblement parallèles au plan du matelas fibreux 2.

Le matelas fibreux 2 présente une masse surfacique allant de 1 à 3 kg/m². Sa masse surfacique est au moins supérieure à 2 fois la masse surfacique du tissu constitutif, et inférieure à 10 fois, préférentiellement comprise entre 3 et 8 fois la masse surfacique du tissu constitutif.

Le matelas fibreux 2 présente une distribution aléatoire des morceaux de tissu 3 dans le plan du matelas fibreux 2, dont résulte des orientations aléatoires des directions principales des fibres de chaque morceau de tissu 3 dans le plan du matelas et un chevauchement des morceaux de tissu 3 entre eux.

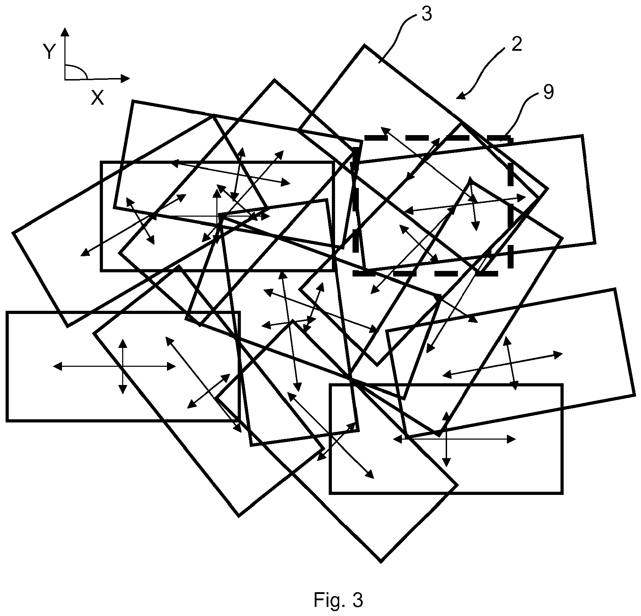

La figure 3 montre un exemple de matelas fibreux 2, en mettant en évidence en transparence les différents morceaux de tissus 3 et les orientations respectives des fibres de chaque morceau individuel.

Les morceaux de tissus 3 sont disposés parallèlement au plan du matelas fibreux 2, assurant des recouvrements de proche en proche entre les morceaux de tissus 3. Les orientations des morceaux de tissus 3 et le chevauchement de morceaux au minimum deux à deux dans le plan du matelas permettent d'obtenir en toute zone carrée d'au moins 1,4 cm de côté (2 cm²), au moins 4 directions de fibres distinctes formant des angles de plus de 15° entre elles.

Comme on peut le voir dans le carré pointillé 9 de la figure 3, les fibres inscrites à l'intérieur du carré pointillé 9 sont en directions multiples, ici supérieur à 4. En considérant des fibres de deux morceaux de tissus 3 dans ce carré pointillé 9, il est possible de trouver deux morceaux de tissus 3 formant un angle pouvant atteindre 45°.

Du fait que chaque morceau de tissus 3 comporte lui-même deux directions de fibres sensiblement perpendiculaires entre elles, le matelas fibreux 2, dans ce carré pointillé 9, présente des orientations de fibres dans de très nombreuses directions parallèles au plan du matelas, ce qui procure des propriétés homogénéisées de raideur et de résistance sensiblement isotrope dans ce plan.

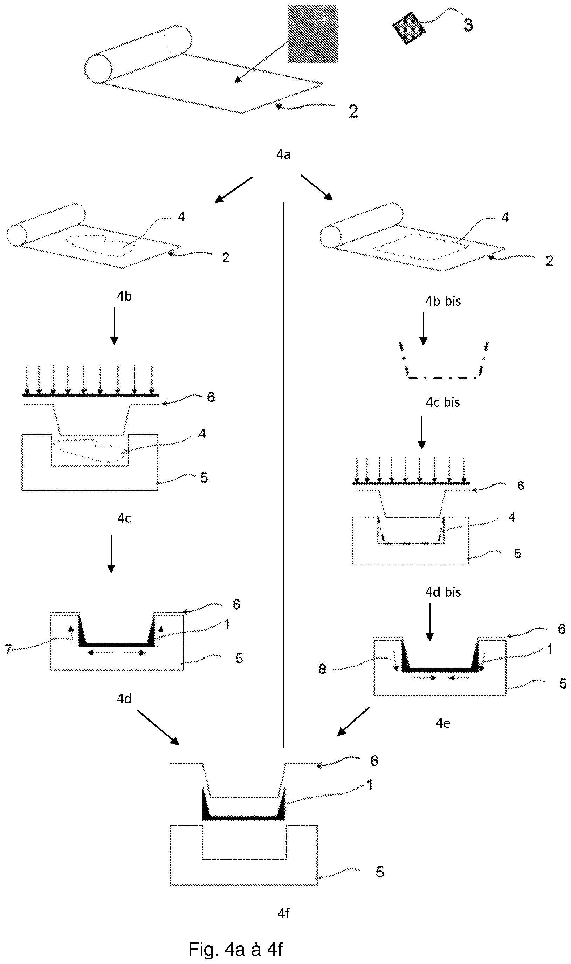

Le matériau selon l'invention permet notamment la réalisation de pièces selon le procédé de fabrication décrit aux figures 4a à 4f.

Il comprend une étape de découpe (fig. 4b ou 4b bis) d'au moins un flanc de matelas fibreux 4 ou ébauche dans le matelas fibreux 2 formé de morceaux de tissu 3.

Le procédé de fabrication comprend en variante un empilement de plusieurs flancs de matelas fibreux 4 ou ébauches.

Le procédé de fabrication comprend en variante une étape de préformage (fig. 4c bis) des flancs de matelas fibreux 4 ou de l'empilement de flancs de matelas fibreux 4.

Le procédé de fabrication comprend en variante une étape d'assemblage des préformes obtenues à l'étape précédente (fig. 4c bis).

La mise en œuvre comprend une étape (fig. 4c ou 4d bis) de disposition des flancs de matelas fibreux 4 ou ébauches, ou préformes ou assemblage de préformes dans un moule 5, 6.

Le procédé de fabrication comprend une étape (fig. 4d ou 4e) de thermocompression des flancs de matelas fibreux 4 ou ébauches, ou préformes ou assemblage de préformes pour former une pièce composite 1 à base de fibres tissées.

Le moule 5, 6 est fermé et une compression et un cycle thermique sont appliqués sur la matière pour la compacter et la faire fluer, selon les directions 7 ou 8 représentées sur les figures 4d et 4e respectivement, pour remplir le volume de l'empreinte du moule 5, 6.

La compression peut être uni-axiale ou multi-axiale selon la cinématique de fermeture de l'outillage.

Préférentiellement, les directions de compression sont localement perpendiculaires ou sensiblement perpendiculaires au plan des flancs de matelas fibreux 4, ébauches ou préformes.

Un cycle thermique de polymérisation est réalisé lorsque la résine est une résine thermodurcissable ou de solidification lorsque la résine est une résine thermoplastique.

L'étape de thermocompression peut être réalisée en autoclave ou par moulage sous presse, préférentiellement en appliquant des pressions d'au moins 80 à 100 bars sur la matière.

Le procédé de fabrication comprend une étape de démoulage (fig. 4f) de la pièce composite à base de fibres tissées 1.

En variante, le procédé de fabrication comprend ensuite une étape d'ébavurage et/ou d'usinage de la pièce composite à base de fibres tissées 1.

En variante, le procédé de fabrication inclut l'hybridation de flancs de matelas fibreux 4 ou préformes découpés dans une ou plusieurs des variantes de matelas fibreux 2 décrits précédemment, et/ou avec des nappes de fibres continues ou discontinues unidirectionnelles, et/ou avec des nappes de fibres continues tissées.

Grâce au matelas selon l'invention, après thermocompression du matériau, on obtient sur les pièces d'épaisseur constante ou variables un recouvrement des morceaux de tissu 3 entre eux assurant une bonne homogénéité des propriétés mécaniques de raideur et de résistance dans toute direction du plan du matelas, assurant ainsi un bon transfert des efforts.

L'invention permet la conservation de plusieurs orientations de fibres dans le plan. Les performances mécaniques sont maintenues même pour une pièce en matériau à fibres tissées pré-imprégnées 1 de très faible épaisseur (équivalent au minimum à 1 fois à l'épaisseur du morceau de tissu 3). On obtient un matériau quasi isotrope.

Suivant la longueur des flancs de matériau fibreux 4 (long ou court), la thermocompression induira un fluage partant du centre selon la direction 8 (perpendiculaire au plan du flanc lorsqu'il est long (fig. 4e) ou selon la direction 7 (flanc court (fig. 4d)).

On obtient alors, après thermocompression, des matériaux composites aux propriétés mécaniques élevées et procurant ces mêmes propriétés dans les plans des couches y compris dans les zones minces de ces pièces moulées.

En fonction de la distribution des flancs de matériau fibreux 4 dans le moule 5, 6 (forme, empilements), la résine flue plus ou moins lors de l'étape de compression.

En règle générale, lors du fluage pendant la thermocompression, il est préférable d'avoir une viscosité de la résine qui permette de conserver le rapport stœchiométrique résine/fibre souhaité. Dans le cas d'épaisseur de pièce très mince, voisine d'une fois l'épaisseur du tissu, il est possible de favoriser le fluage préférentiel de la résine, en générant des pressions de compactage plus élevées.

Dans le cas de pièce en matériau à fibres tissées pré-imprégnées 1 présentant des épaisseurs évolutives et/ou fines, le fluage des morceaux de tissu 3 ou déplacement relatif de ces derniers les uns par rapport aux autres lors de la thermocompression, permet de remplir le volume total des empreintes 5, 6 du moule.

Un exemple de réalisation est décrit ci-dessous :
Le matelas de morceaux de tissu(s) (ou matelas fibreux 2) est réalisé à partir de tissu(s) de fibres de carbones de masse surfacique d'environ 280 +/- 30 g/m².

Les fibres sont en carbone dit à haute résistance ou à module intermédiaire et tissées selon une contexture à faible embuvage de type satin de 5 ou sergé de 2.

Le tissu est imprégné d'une résine thermodurcissable époxyde pour former un matériau pré-imprégné ayant un taux massique compris entre environ 70% de fibres et 30% de résine et 60% de fibres et 40% de résine.

La nappe de fibres tissées destinée à former le tissu pré-imprégné qui va être coupé en morceaux pour former les morceaux de tissu 3,présente une épaisseur comprimée d'environ 0,28 mm.

A l'état initial, le morceau de tissu 3 ou nappe de fibres tissées pré-imprégnés présente une épaisseur moyenne de 0,42 mm.

Le tissu imprégné est découpé en morceaux sensiblement carrés de 35 mm de côté (soit 125 fois l'épaisseur nominale du tissu) pour former des morceaux de tissu 3.

Les morceaux de tissu 3 sont disposés aléatoirement en orientation et position sur une surface plane, à raison en moyenne de 3200 morceaux/m² conduisant à obtenir un matelas de morceaux de tissu de masse surfacique en moyenne de 1,5 kg/m² dans lequel on trouve en moyenne 5 couches de morceaux de tissu 3.

Ce matériau de fibres tissées pré-imprégnées étant mis en œuvre en une seule couche dans un outillage, chauffé pour que la matrice atteigne une viscosité suffisamment faible pour permettre le glissement des morceaux les uns par rapport aux autres, telle que par exemple moins de 100 poises et plus de 20 poises, et soumis à une pression via la fermeture d'outillage, pression pouvant atteindre de 20 bars jusque plusieurs centaines de bars, peut permettre d'offrir des épaisseurs de pièce allant de 0,5 mm environ à 4 mm environ.

Les propriétés mécaniques du matériau moulé présentent des modules d'élasticité dans les deux directions principales de surface de pièce de l'ordre de 30 à 45 GPa et une résistance mécanique à rupture en traction dans le sens du plan de pièce supérieure à 300 MPa.

## Revendications

1. Matériau de fibres tissées pré-imprégnées, **caractérisé en ce qu'**il se présente sous la forme d'un matelas fibreux (2) comprenant au moins une couche de plusieurs morceaux de tissus (3) fibreux pré-imprégnés de résine, une partie au moins du tissu formant le matelas fibreux (2) présentant une contexture à embuvage inférieur à 5%, lesdits morceaux de tissus (3) étant en outre positionnés parallèlement au plan (X, Y) du matelas fibreux (2) et orientés selon différentes directions dans ledit plan (X, Y).

2. Matériau selon la revendication 1 **caractérisé en ce que** les morceaux de tissus (3) sont orientés selon de multiples directions de sorte que chaque zone de 2 cm² du matelas fibreux (2) comprend dans son épaisseur au moins 4 directions de fibres distinctes formant des angles de plus de 15° entre elles.

3. Matériau selon l'une des revendications 1 ou 2 **caractérisé en ce que** l'intégralité du tissu pour former le matelas fibreux (2) présente une contexture à faible embuvage.

4. Matériau selon l'une quelconque des revendications 1 à 3, **caractérisé en ce que** le ratio entre la longueur et l'épaisseur des morceaux de tissu (3) du matelas fibreux (2) est sensiblement compris entre 60 et 250.

5. Matériau selon la revendication 4, **caractérisé en ce que** le ratio entre la longueur et l'épaisseur des morceaux de tissu (3) du matelas fibreux (2) est sensiblement compris entre 80 et 200.

6. Matériau selon la revendication 5, **caractérisé en ce que** le ratio entre la longueur et l'épaisseur des morceaux de tissu (3) du matelas fibreux (2) est sensiblement compris entre 100 et 180.

7. Matériau selon l'une quelconque des revendications 1 à 6, **caractérisé en ce que** la largeur des morceaux de tissu (3) du matelas fibreux (2) est supérieure au quart de leur longueur.

8. Matériau selon l'une quelconque des revendications 1 à 6, **caractérisé en ce que** la largeur des morceaux de tissu (3) du matelas fibreux (2) est supérieure à la moitié de leur longueur.

9. Matériau selon l'une quelconque des revendications 1 à 6, **caractérisé en ce que** la largeur des morceaux de tissu (3) du matelas fibreux (2) est sensiblement égale à leur longueur.

10. Matériau selon l'une quelconque des revendications 1 à 9, **caractérisé en ce que** le matelas fibreux (2) présente une masse surfacique moyenne au moins 2 fois supérieure à la masse surfacique du tissu constitutif et inférieure à 10 fois la masse surfacique du tissu constitutif.

11. Matériau selon l'une quelconque des revendications 1 à 10, **caractérisé en ce que** le matelas fibreux (2) présente une masse surfacique moyenne comprise entre 1 kg/m² et 3 kg/m².

12. Matériau selon l'une quelconque des revendications 1 à 11, **caractérisé en ce que** les morceaux de tissus (3) sont imprégnés de résine polymère thermodurcissable apte à être réticulée par une opération de thermocompression ou de résine polymère thermoplastique apte à être solidifiée par une étape de thermocompression.

13. Matériau selon l'une quelconque des revendications 1 à 12, **caractérisé en ce que** les morceaux de tissu (3) du matelas fibreux (2) présentent une forme triangulaire rectangulaire ou hexagonale.

14. Matériau selon l'une des revendications 1 à 13 **caractérisé en ce qu'**il comporte des morceaux de nappes de fibres unidirectionnelles pré-imprégnées en combinaison avec les morceaux de fibres tissées pré-imprégnées.

15. Pièce en matériau composites (1), **caractérisée en ce qu'**elle est obtenue par la mise en œuvre par thermocompression d'au moins un matelas fibreux (2) tels que définis selon l'une quelques des revendications 1 à 14.

## Patentansprüche

1. Material aus vorimprägnierten gewebten Fasern, **dadurch gekennzeichnet, dass** es die Form einer Fasermatte (2) aufweist, die mindestens eine Schicht aus mehreren mit Harz vorimprägnierten Fasergewebestücken (3) umfasst, wobei mindestens ein Teil des die Fasermatte (2) bildenden Gewebes eine Gewebedichte von weniger als 5 % aufweist, wobei die Gewebestücke (3) ferner parallel zu der Ebene (X, Y) der Fasermatte (2) positioniert und in der Ebene (X, Y) in verschiedene Richtungen ausgerichtet sind.

2. Material nach Anspruch 1, **dadurch gekennzeichnet, dass** die Gewebestücke (3) in mehrere Richtungen ausgerichtet sind, so dass jeder Bereich von 2 cm² der Fasermatte (2) in ihrer Dicke mindestens 4 Richtungen unterschiedlicher Fasern umfasst, die sich zwischen Winkeln von mehr als 15° bilden.

3. Material nach einem der Ansprüche 1 oder 2, **dadurch gekennzeichnet, dass** das gesamte Gewebe zur Bildung der Fasermatte (2) eine geringe Gewebedichte aufweist.

4. Material nach einem der Ansprüche 1 bis 3, **dadurch gekennzeichnet, dass** das Verhältnis zwischen der Länge und der Dicke der Gewebestücke (3) der Fasermatte (2) im Wesentlichen zwischen 60 und 250 liegt.

5. Material nach Anspruch 4, **dadurch gekennzeichnet, dass** das Verhältnis zwischen der Länge und der Dicke der Gewebestücke (3) der Fasermatte (2) im Wesentlichen zwischen 80 und 200 liegt.

6. Material nach Anspruch 5, **dadurch gekennzeichnet, dass** das Verhältnis zwischen der Länge und der Dicke der Gewebestücke (3) der Fasermatte (2) im Wesentlichen zwischen 100 und 180 liegt.

7. Material nach einem der Ansprüche 1 bis 6, **dadurch gekennzeichnet, dass** die Breite der Gewebestücke (3) der Fasermatte (2) größer ist als ein Viertel ihrer Länge.

8. Material nach einem der Ansprüche 1 bis 6, **dadurch gekennzeichnet, dass** die Breite der Gewebestücke (3) der Fasermatte (2) größer ist als die Hälfte ihrer Länge.

9. Material nach einem der Ansprüche 1 bis 6, **dadurch gekennzeichnet, dass** die Breite der Gewebestücke (3) der Fasermatte (2) im Wesentlichen gleich ihrer Länge ist.

10. Material nach einem der Ansprüche 1 bis 9, **dadurch gekennzeichnet, dass** die Fasermatte (2) eine durchschnittliche Flächenmasse aufweist, die mindestens 2mal größer als die Flächenmasse des konstitutiven Gewebes und 10mal kleiner als die Oberflächenmasse des konstitutiven Gewebes ist.

11. Material nach einem der Ansprüche 1 bis 10, **dadurch gekennzeichnet, dass** die Fasermatte (2) eine durchschnittliche Flächenmasse zwischen 1 kg/m² und 3 kg/m² aufweist.

12. Material nach einem der Ansprüche 1 bis 11, **dadurch gekennzeichnet, dass** die Gewebestücke (3) mit wärmehärtbarem Polymerharz, das durch ein Verfahren der Thermokompression vernetzt werden kann, oder mit thermoplastischem Polymerharz, das durch einen Schritt der Thermokompression ausgehärtet werden kann, imprägniert sind.

13. Material nach einem der Ansprüche 1 bis 12, **dadurch gekennzeichnet, dass** die Gewebestücke (3) der Fasermatte (2) eine dreieckige, rechteckige oder sechseckig Form aufweisen.

14. Material nach einem der Ansprüche 1 bis 13, **dadurch gekennzeichnet, dass** es Vliesstücke aus vorimprägnierten unidirektionalen Fasern in Kombination mit den Stücken aus vorimprägnierten gewebten Fasern umfasst.

15. Teil aus Verbundmaterial (1), **dadurch gekennzeichnet, dass** es durch Durchführung einer Thermokompression mindestens einer Fasermatte (2), wie nach einem der Ansprüche 1 bis 14 definiert, erhalten wird.

## Claims

1. A pre-impregnated woven fiber material, **characterized in that** it is in the form of a fibrous mat (2) comprising at least one layer of several pieces of fibrous fabric (3) pre-impregnated with resin, at least one portion of the fabric forming the fibrous mat (2) having a shrinkage contexture lower than 5%, said fabric pieces (3) being further positioned parallel to the plane (X, Y) of the fibrous mat (2) and oriented according to different directions in said plane (X, Y).

2. The material according to claim 1 **characterized in that** the fabric pieces (3) are oriented in multiple directions so that each area of 2 cm² of the fibrous mat (2) comprises across its thickness at least 4 distinct directions of fibers forming angles of more than 15° therebetween.

3. The material according to any of claims 1 or 2 **characterized in that** the entire fabric forming the fibrous mat (2) has a low-shrinkage contexture.

4. The material according to any one of claims 1 to 3, **characterized in that** the ratio between the length and the thickness of the fabric pieces (3) of the fibrous mat (2) is substantially comprised between 60 and 250.

5. The material according to claim 4, **characterized in that** the ratio between the length and the thickness of the fabric pieces (3) of the fibrous mat (2) is substantially comprised between 80 and 200.

6. The material according to claim 5, **characterized in that** the ratio between the length and the thickness of the fabric pieces (3) of the fibrous mat (2) is substantially comprised between 100 and 180.

7. The material according to any one of claims 1 to 6, **characterized in that** the width of the fabric pieces (3) of the fibrous mat (2) is larger than the quarter of their length.

8. The material according to any one of claims 1 to 6, **characterized in that** the width of the fabric pieces (3) of the fibrous mat (2) is larger than half their length.

9. The material according to any one of claims 1 to 6, **characterized in that** the width of the fabric pieces (3) of the fibrous mat (2) is substantially equal to their length.

10. The material according to any one of claims 1 to 9, **characterized in that** the fibrous mat (2) has an average surface mass which is at least 2 times greater than the surface mass of the constituent fabric and less than 10 times the surface mass of the constituent fabric.

11. The material according to any one of claims 1 to 10, **characterized in that** the fibrous mat (2) has an average surface mass comprised between 1 kg/m² and 3 kg/m².

12. The material according to any one of claims 1 to 11, **characterized in that** the fabric pieces (3) are impregnated with thermosetting polymer resin adapted to be crosslinked by a thermocompression operation or with a thermoplastic polymer resin adapted to be solidified by a thermocompression step.

13. The material according to any one of claims 1 to 12, **characterized in that** the fabric pieces (3) of the fibrous mat (2) have a triangular, rectangular or hexagonal shape.

14. The material according to any of claims 1 to 13 **characterized in that** it comprises pre-impregnated unidirectional fiber lap pieces in combination with the pre-impregnated woven fiber pieces.

15. A part made of a composite material (1), **characterized in that** it is obtained by the implementation by thermocompression of at least one fibrous mat (2) as defined according to any one of claims 1 to 14.
